Europäisches Patentamt

European Patent Office

Office européen des brevets

(11) Numéro de publication: **0 442 361 B1**

(12) **FASCICULE DE BREVET EUROPEEN**

(45) Date de publication de fascicule du brevet: **18.01.95** (51) Int. Cl.6: **A23L 1/318**

(21) Numéro de dépôt: **91101568.3**

(22) Date de dépôt: **06.02.91**

(54) **Traitement des viandes.**

(30) Priorité: **09.02.90 EP 90102562**

(43) Date de publication de la demande:
**21.08.91 Bulletin 91/34**

(45) Mention de la délivrance du brevet:
**18.01.95 Bulletin 95/03**

(84) Etats contractants désignés:
**CH DE DK ES FR GB IT LI SE**

(56) Documents cités:
**EP-A- 0 031 631**
**US-A- 3 506 455**

**PATENT ABSTRACTS OF JAPAN, vol. 12, no. 472 (C-551)[3319], 9 décembre 1988;& JP-A- 63 192 362 (SNOW BRAND MILK PROD. CO., LTD) 09-08-1988**

(73) Titulaire: **FRISCO-FINDUS AG**
**Industriestrasse**
**CH-9400 Rorschach (CH)**

(72) Inventeur: **Bisson, Jean-Pierre**
**Village Plantro,**
**La Barre de Semilly**
**F-50810 Saint-Jean des Baisants (FR)**
Inventeur: **Miège, Emmanuel**
**1, rue Villiers de l'Isle Adam**
**F-6000 Beauvais (FR)**
Inventeur: **Poillot, Gilles**
**353, Parc de Cassan**
**F-95290 l'Isle Adam (FR)**

**Description**

La présente invention concerne un procédé d'amélioration des viandes à cuire, notamment celles destinées aux plats cuisinés.

Certains morceaux cuits de bonne qualité, c'est-à-dire maigres et pauvres en collagène peuvent présenter des défauts de texture lorsqu'ils sont régénérés dans un four ou dans l'eau bouillante après avoir été entreposés par exemple à l'état congelé, ceci même si la cuisson a été à courte et à basse température.

D'autres morceaux de qualité moindre, généralement plus gras et contenant plus de collagène nécessitent une cuisson plus longue et à plus haute température. Dans ce dernier cas, il se produit une exsudation importante d'eau lors de la cuisson. En conséquence la texture est sèche, hétérogène et dure. Le rendement en viande diminue du fait de l'exsudation.

Pour remédier à ces inconvénients et obtenir la tendreté et la jutosité recherchée avec un rendement amélioré, on incorpore généralement des polyphosphates à la viande crue, par exemple sous forme de marinade. Cette addition rencontre de la résistance chez les consommateurs car, si les polyphosphates retiennent l'eau lors de la cuisson, et assurent la tendreté souhaitée, ils masquent généralement la texture fibreuse de la viande en lui procurant une texture proche de celle des produits de charcuterie. Par ailleurs, les polyphosphates sont de plus en plus contestés sur le plan nutritionnel.

Patent Abstr. of Japan, vol. 12, no. 472, (C-551, 3319), mentionne l'utilisation de protéines du lactosérum dénaturées thermiquement comme substitut de viande. Les protéines de lactosérum sont gélifiées dans une émulsion contenant de la graisse et un hydrocolloïde en tant que gélifiant, et le gel est réduit en particules, puis incorporé dans les viandes.

On a proposé, par exemple selon la demande de brevet européen EPA 31.631, d'incorporer des protéines de lactosérum natives dans la viande crue comme agent d'extension de celle-ci. Nous avons constaté que cette méthode présentait des inconvénients d'ordre technique, l'incorporation des protéines natives à fort pouvoir moussant étant difficile, et d'ordre organoleptique, la texture n'étant pas satisfaisante.

L'invention permet de pallier les inconvénients exposés ci-dessus.

Le procédé selon l'invention, dans lequel on traite la viande avec une marinade contenant des protéines lactiques de manière à absorber complètement la marinade, est caractérisé par le fait que l'on incorpore dans la viande crue 0,5 à 2,5% en poids de protéines sous forme de marinade, que les protéines proviennent de lactosérum doux de fromagerie dont le pH est ajusté à 6-7 et que les protéines sont dénaturées thermiquement à un taux de dénaturation de 50-90%.

La viande peut être par exemple de porc, de boeuf, d'agneau, de veau, de volaille, par exemple de poulet ou de dinde ou de gibier. Elle peut être choisie parmi les morceaux nobles pauvres en matière grasse et en collagène, par exemple le filet mignon, la longe, la noix de porc ou de veau, la macreuse de boeuf, le blanc de poulet ou de dinde. Elle peut être constituée de morceaux moins nobles, contenant plus de matière grasse et de collagène, par exemple le collier de boeuf, de veau ou d'agneau, la noix de hachage de porc, le jarret de boeuf, de veau, de porc ou d'agneau, le pilon ou le haut de cuisse de poulet ou de dinde.

Les dimensions des morceaux peuvent varier du muscle entier, aux cubes, tranches ou hâchis.

Les morceaux sont de préférence parés, c'est-à-dire débarrassés de la plus grande partie de la graisse visible, des tissus conjonctifs et nerveux.

Les protéines de lactosérum proviennent de lactosérum doux de fromagerie, dont le pH est ajusté à 6-7.

Elles subissent un traitement thermique de dénaturation. Le taux de dénaturation visé est 50-90%. On exprime ce taux par le rapport:

$$\frac{\text{azote total} - \text{azote soluble}}{\text{azote total} - \text{azote non-protéique}} \times 100$$

par analyse classique de l'azote selon la méthode de Kjeldahl.

La dénaturation peut intervenir sur le lactosérum tel quel ou concentré, par exemple à environ 15% de matière sèche, par exemple par évaporation sous vide.

Le traitement thermique peut être réalisé par charges, par exemple dans une cuve à double paroi sous agitation ou en continu, dans un échangeur thermique par exemple à surface râclée, à plaques ou tubulaire ou encore dans un stérilisateur à ultra haute température. La température et la durée du traitement peuvent être adaptées au taux de dénaturation recherché, et être par exemple 95-125°C, respectivement 3 à 30 min, la température la plus élevée étant associée à la durée la plus faible.

Il se produit une floculation. On neutralise la dispersion au moyen d'une solution basique, puis on concentre la dispersion par ultrafiltration jusqu'à environ 20 -22%, de matière sèche. Cette opération permet d'enrichir la dispersion en protéines de lactosérum, par exemple à 30-40% en poids de la matière sèche, en éliminant une partie du lactose et des minéraux. On sèche enfin le rétentat par exemple par pulvérisation.

Les protéines sériques dénaturées (PSD) constituent 0,5 à 2,5% et de préférence 0,8 à 1,6% en poids de la viande crue. Selon l'invention, et par souci de clarté, la quantité de protéine dénaturée doit être comprise en fait comme la quantité théorique de protéine pure et non pas comme la quantité de concentrat protéique tel qu'obtenu en pratique. Par contre dans les exemples, les quantités incorporées sont relatives au concentrat.

Basé sur la marinade, le concentrat de protéines sériques représente 9 à 20% en poids. La marinade peut contenir d'autres ingrédients tels que des hydrates de carbone, par exemple, amidon, lactose, glucose, maltodextrine, du sel, des épices et aromates.

De préférence, la marinade contient 7 à 13% en poids d'amidon non gélifié.

Du fait de leur état dénaturé, les protéines ne gélifient pas lors de la cuisson ultérieure. La gélification est assurée par l'amidon. Dans le système gélifiant préféré, les protéines sériques dénaturées interviendraient pour structurer le gel par liaison avec les fibres musculaires, ceci n'étant bien entendu qu'une hypothèse. La stabilisation de la texture ainsi réalisée s'opposerait à une rétraction des fibres lors des traitements thermiques successifs, par exemple de cuisson, de congélation et de régénération lors de la préparation ménagère - en agissant sur la tendreté de la viande. L'amidon responsable de la formation du gel stabilise l'eau présente dans le muscle et évite les exudations excessives lors des traitements thermiques successifs.

Ainsi, le choix de l'amidon et sa concentration sont adaptés au mode de cuisson courte ou longue. Dans une cuisson courte, appropriée pour les viandes maigres de qualité supérieure, par exemple à environ 70-80°C à coeur pendant 15 à 25 min, l'amidon de tubercules, par exemple de pomme-de-terre est particulièrement approprié. Lorsqu'on veut traiter des viandes de moindre qualité plus riches en collagène, une cuisson longue, pendant 3 à 4h, à une température à coeur de 90-100°C nécessite un amidon résistant aux hautes températures, par exemple un amidon de céréales, particulièrement de maïs modifié, réticulé. Bien entendu, l'amidon peut être choisi parmi les sources conventionnelles par exemple le riz, le blé ou le maïs.

Pour préparer la marinade, on dissout d'abord les ingrédients autres que les PSD et l'amidon dans l'eau froide par exemple à 4 - 20°C. On incorpore ensuite l'amidon et en dernier lieu les PSD sous forte agitation. L'amidon n'étant pas soluble à froid, on peut soit augmenter la viscosité de la solution en y ajoutant un épaississant, soit de préférence maintenir une agitation permanente avant ou pendant l'incorporation de manière à éviter la sédimentation de l'amidon qui conduirait à une répartition irrégulière des constituants de la marinade.

La quantité de marinade incorporée dans la viande peut être 10 à 20% en poids de la viande crue.

Le mode d'incorporation de la marinade peut être pour les morceaux l'injection au moyen d'aiguilles suivie d'un barattage, de préférence sous un léger vide, permettant la pénétration et la distribution uniforme à coeur de la marinade. Dans certains cas, par exemple pour la viande de volaille, les petits morceaux ou la viande hâchée, un barattage suffit. La durée du barattage ne doit pas être trop longue de manière à préserver l'intégrité des morceaux. Elle est par exemple de 10 à 30 min.

Le traitement avec la marinade est effectué de préférence à basse température de 0 à 10°C après que la viande ait été tempérée à une température de -3°C à 4°C.

Selon la nature de la viande et des morceaux, on peut effectuer une cuisson courte ou longue ou encore sous pression. On peut rissoler les morceaux préalablement à leur cuisson. Dans ce dernier cas, il est avantageux d'enrober les morceaux avec une marinade d'enrobage à base d'huile préalablement au rissolage. Une telle marinade peut contenir par exemple de la sauce soja, de l'extrait de viande, du glucose, de l'huile pour friture, des épices. On peut l'appliquer à raison de 3 à 7% en poids de la viande crue par simple malaxage.

La cuisson peut être en mijoté, par exemple en présence d'un fond de cuisson avec séparation du jus de cuisson par égouttage, puis après cuisson et refroidissement, réincorporation d'une sauce comprenant le jus et conditionnement en présence d'une garniture, par exemple de légumes dans un emballage.

On peut en variante effectuer la cuisson dans un emballage, par exemple en boyau ouvert le cas échéant après rissolage des morceaux, puis après cuisson séparer le jus par égouttage et fermer le boyau.

La viande peut dans ce cas constituer un produit intermédiaire destiné à une utilisation différée dans un plat préparé.

Après cuisson et refroidissement, la viande ou le plat préparé contenant la viande peut être conditionné, réfrigéré, congelé ou encore stérilisé.

Les produits obtenus selon l'invention peuvent être régénérés par traitement dans l'eau bouillante, aux microondes ou dans un four à infra-rouge ou à gaz.

Les viandes ont une texture stabilisée dans le temps, c'est-à-dire homogène, constante et précisément définie malgré les traitements thermiques de congélation et de régénération. Elles ont d'excellentes propriétés organoleptiques, en particulier une bonne jutosité, une bonne tendreté et une bonne saveur. Grâce au procédé selon l'invention, la texture d'origine des viandes est préservée tout au long du traitement, à l'entreposage et à la régénération. Le rendement du procédé est similaire à celui pouvant être obtenu par incorporation de polyphosphates.

Les protéines de lactosérum ont un effet de blanchiment souhaité sur les viandes de volaille.

Les exemples ci-après illustrent l'invention. Dans ceuxci, les pourcentages sont pondéraux. Dans ces exemples, le rendement global est exprimé comme le pourcentage pondéral de viande obtenue en fin de traitement par rapport à la viande initialement mise en oeuvre. Le rendement à la cuisson est le pourcentage pondéral de viande obtenue après cuisson par rapport à la viande marinée, soit:

```
viande cuite (non refroidie mais le cas échéant
 égouttée)
-----------------------------------------------------
              viande + marinade
```

Exemples 1-6

1. On concentre du lactosérum provenant de la fabrication de camembert contenant 6,5% de matière sèche composée de 75% de lactose, 12% de protéine, 8,8% de minéraux et 5% de matière grasse, jusqu'à 15% de matière sèche par évaporation. Le pH initial de 6,3 tombe à 6,1. On traite ensuite thermiquement le concentrat à 95°C pendant 30 min. dans une cuve à double paroi sous agitation. Il se forme un floculat. On neutralise la suspension à pH 7 par addition d'une solution aqueuse d'hydroxyde de sodium. Après avoir ajusté la température de la suspension à 50°C on l'ultrafiltre dans un module muni de membranes de 20'000-40'000 dalton de zône de coupure des poids moléculaires jusqu'à ce que le rétentat ait 21-22% de matière sèche. On sèche enfin le rétentat par pulvérisation.

Les protéines sériques dénaturées obtenues ont la composition ci-après:

| | | | % |
|---|---|---|---|
| Matière sèche dont | | | 96 |
| | Protéine | 40 | |
| | Matière grasse | 5 | |
| | Lactose | 38 | |
| | Minéraux | 13 | |
| Eau | | | 4 |

Leur taux de dénaturation (méthode de Kjeldahl) est 80%.

2-6. On procède comme à l'exemple 1 ci-dessus sauf que l'on effectue le traitement thermique de dénaturation au moyen des appareils indiqués dans des conditions de température et de durée du traitement indiquées dans le tableau 1 ci-après, en partant de lactosérum à 6,5% de matière sèche, c'est-à-dire non concentré:

EP 0 442 361 B1

Tableau 1

| Exemple | Appareil | Température (°C) | Durée (min.) | Taux de dénaturation (%) |
|---------|----------|-----------------|--------------|--------------------------|
| 2 | Echangeur à surface râclée | 110-112 | 6 | 70 |
| 3 | Echangeur à surface râclée | 107 | 5 | 60 |
| 4 | Echangeur à plaques | 110-112 | 6 | 70 |
| 5 | Echangeur à plaques | 95 | 5 | 50 |
| 6 | Appareil de stérilisation UHT (ultra haute température) | 125 | 3 | 70 |

Exemple 7

On décongèle un morceau de longe de porc parée, dégraissée de 0,3 kg dans une armoire de tempérage maintenu à 4°C. La pièce de viande a un pH de 5,5-5,8. Au moyen d'une injecteuse multi-aiguilles, on injecte au coeur du morceau une marinade représentant 15% de la viande crue. La marinade d'injection a la composition suivante:

| | % |
|---|---|
| Protéines sériques dénaturées (PSD) selon l'exemple 1 | 18 |
| Glucose cristallisé | 7,9 |
| Sel | 4,9 |
| Eau | 69,2 |

Elle est préparé par dissolution dans l'eau froide du sel et du glucose, puis incorporation des PSD sous agitation vigoureuse. Après l'injection, on soumet la viande à un malaxage à 10°C pendant 30 min. après l'avoir enrobé avec une marinade d'enrobage. La marinade d'enrobage représente 7% de la viande crue et a la composition suivante:

| | % |
|---|---|
| Hydrolysat, extrait de viande | 49 |
| Amidon natif | 12 |
| Huile végétale | 20 |
| Sucre réducteur | 6 |
| Eau | 13 |

On traite ensuite la viande par cuisson courte, à basse température dans un four à humidité contrôlée jusqu'à une température à coeur de 75°C. On refroidit alors la viande à 15°C dans un tunnel ventilé. Après découpe en tranches, on place la viande avec une sauce dans un sachet en matière plastique souple résistant à l'ébullition que l'on ferme hermétiquement. Enfin, on congèle les sachets à -30°C.

Le rendement à la cuisson est 78% et le rendement global 93%.

Exemples comparatifs A-D

A. A titre de comparaison, le rendement à la cuisson est 74% et le rendement global 81% dans le cas d'une viande dans laquelle l'on n'a pas injecté de marinade. Par ailleurs, après régénération dans l'eau bouillante pendant 15 min., la température à coeur étant 60°C, la texture est jugée onctueuse et tendre pour la viande injectée alors que la viande non-injectée a une texture sèche, dure et hétérogène.

B-D. Dans le but de montrer les avantages de l'injection de protéines sériques dénaturées thermiquement par rapport à celle de protéines sériques natives, on réalise la cuisson de longe de porc comme à l'exemple 7 à celà près que la marinade d'injection contient 8%, (exemple C), respectivement 12% (exemple B) de protéines sériques natives selon leur composition de manière à obtenir une teneur en protéine sérique de 0,95% dans la viande crue après une injection de 15% de marinade par rapport à la viande crue. La marinade contient également 4,6% de sel, le complément à 100% étant de l'eau et du

5

glucose. Dans l'exemple D, il n'y a pas d'injection. La régénération a lieu comme indiqué à l'exemple comparatif A ci-dessus. Les résultats relatifs au rendement et à la texture sont indiqués dans le tableau 2 ci-après.

Tableau 2

| Exemple | Protéine sérique | Rendement à la cuisson (%) | Texture | |
|---|---|---|---|---|
| | | | Note moyenne de dégustation[1] | Commentaire |
| B | Native, obtenue par ultrafiltration, à 60% de protéine | 78 | 7 | D'abord moelleuse, puis sableuse en fin de mache |
| C | Native, obtenue par chromatographie par colonne, à 90% de protéine | 68 | 6 | Sèche[2] |
| D (sans injection) | --- | 74 | 5 | Sèche, dure et hétérogène |
| 7 (rappel) | PSD, à 40% de de protéine | 78 | 7 - 8 | Moelleuse et régulière |

Légende:
1. Plus la note est élevée, meilleure est la texture.
2. Dans le cas de l'exemple C, l'utilisation de cette protéine est difficile car elle foisonne lors de sa dissolution.

Au cours des essais, les PSD ont présenté des avantages certains par rapport aux protéines natives:
- Elles sont facilement dispersibles dans l'eau sous forte agitation et n'ont pas les propriétés moussantes des protéines sériques natives.
- Les PSD n'ont pas de propriétés gélifiantes à la chaleur. Les protéines sériques natives, par contre, ne gélifient pas totalement dans les conditions de cuisson utilisées. Ceci explique le caractère sableux observé dans l'exemple comparatif B, dû semble-t-il à la présence de particules protéiques en suspension et non encore gélifiées.
- Les PSD ont la capacité de retenir davantage d'eau et de jouer le rôle de liant, ce qui donne à la viande une texture stabilisée plus juteuse, moelleuse et homogène.

Exemples 8-12

On traite différents morceaux de viande comme à l'exemple 7 en utilisant une marinade d'incorporation à raison de 10 ou 20% par rapport à la viande crue. La marinade d'incorporation a la composition suivante:

| | % |
|---|---|
| Concentrat de PSD selon l'exemple 1 | 9 - 15 |
| dont 40% de protéine | 3,6 - 6 |
| Amidon de pomme-de-terre | 9 - 12,7 |
| Lactose | 6 |
| Sel | 4,5 |
| Eau | complément à 100 |

Pour préparer la marinade, on dissout d'abord le sel et le lactose dans l'eau à 10°C dans un bac puis on incorpore l'amidon et les PSD sous forte agitation. Pour éviter la sédimentation de l'amidon qui ne se dissout pas à 10°C, on maintient une agitation permanente dans le bac pendant l'incorporation dans la viande.

On incorpore la marinade ci-dessus soit par injection, soit par barattage. Dans ce dernier cas, le barattage dure 15 min. et on n'utilise pas de marinade d'enrobage. Les conditions du procédé et les résultats obtenus sont indiqués dans le tableau 3 ci-après.

Tableau 3

| Exemple | Viande | Incorporation de la marinade, % | Marinade | | Rendement à la cuisson (%) | Texture | |
|---|---|---|---|---|---|---|---|
| | | | PSD (%) | Amidon (%) | | Note moyenne | Commentaire |
| 8 | Filet mignon de porc | Injection, 20% | 15 | 12,7 | 81 | 8 | Moelleuse et fondante |
| 9 | Epaule de veau | Injection, 10% | 10,9 | 9 | 75 | 7-8 | Homogène et moelleuse |
| 10 | Epaule de porc | Injection, 20% | 15 | 11,5 | 77 | 8 | Moelleuse |
| 11 | Blanc de poulet | Barattage, 20% | 9 | 13 | -- | 8-9 | Moelleuse |
| 12 | Cuisse de haut de cuisse de dinde | Barattage, 20% | 9 | 13 | -- | 8-9 | Moelleuse |

Légende: - non déterminé

Exemples comparatifs E-J

A titre de comparaison, on procède à la préparation des mêmes morceaux, de la même manière soit avec injection à 20% par rapport à la viande crue d'une solution aqueuse contenant des polyphosphates (le taux de polyphosphates injectés est de 0,3%, exprimé en $P_2O_5$, par rapport à la viande crue, exemple E), soit sans injection (exemples F-J).

Les conditions du procédé et les résultats sont indiqués dans le tableau 4 ci-après:

Tableau 4

| Exemple | Viande | Injection, % | Rendement à la cuisson (%) | Texture | |
|---|---|---|---|---|---|
| | | | | Note moyenne de dégustation | Commentaire |
| E | Filet mignon de porc | Solution de polyphosphates, 20% | 82 | 7 | Moelleuse et tendre, mais "confite", sèche en cours de conservation |
| F | Filet mignon de porc | -- | 74 | 5-6 | Sèche,dure, hétérogène |
| G | Epaule de veau | -- | -- | 6-7 | Sèche et hétérogène |
| H | Epaule de porc | -- | -- | 6 | Sèche, dure |
| I | Blanc de poulet | -- | -- | 7 | Sèche, aspect gris |
| J | Cuisse et haut de cuisse de dinde | -- | -- | 7 | Sèche, rejet de particules de viande brune |

Légende: - sans incorporation, respectivement non-déterminé

Par rapport aux polyphosphates, le mélange PSD-amidon de pomme de terre permet d'obtenir un rendement pratiquement équivalent (8, comparé à E). Du point de vue de la texture, elle est moelleuse, juteuse et tendre tout en préservant les caractéristiques de la viande d'origine alors que les polyphosphates masquent la structure fibreuse de la viande, la texture "confite" étant proche d'un produit de charcuterie. La texture stabilisée obtenue selon 8 est maintenue pendant au moins 6 mois d'entreposage à -10°C et -20°C alors que selon E la viande se déssèche au cours de l'entreposage.

Pour le veau (9 comparé à G), l'injection de PSD et d'amidon de pomme de terre en uniformisant les textures des différents muscles constitutifs de l'épaule évite une découpe fine du morceau difficile à mettre en oeuvre industriellement.

En ce qui concerne la viande de volaille (11 comparé à I et 12 comparé à J), l'injection de PSD et d'amidon permet d'obtenir une bonne jutosité sans séparation de particules et de blanchir la viande.

Exemples 13-14

Les morceaux de viande de moindre qualité présentant plus de collagène que les viandes des exemples précédents requièrent une cuisson plus longue et à plus haute tempèrature, que dans les exemples précédents, en mijoté.

On décongèle de la viande relativement riche en collagène et on la tempère à 0-2°C. Après découpage en cubes on décongèle entièrement la viande à 4°C, puis on injecte dans les morceaux une marinade d'injection ayant la composition suivante au moyen d'une injecteuse multi-aiguilles.

|  | % |
|---|---|
| Concentrat de PSD selon l'exemple 1 | 15,2 |
| Amidon de maïs modifié | 10,8 |
| Lactose | 12,5 |
| Sel | 7,7 |
| Eau | complément à 100 |

On malaxe ensuite les morceaux avec une marinade d'enrobage comme indiqué à l'exemple 7. On rissole alors les morceaux, puis on les met dans des plateaux avec un fond de cuisson. On cuit ensuite les morceaux en présence d'air saturé en vapeur de manière à atteindre une température atteinte à coeur de 95°C. Après égouttage, on refroidit les morceaux de viande, puis on les place dans des barquettes avec une garniture de légumes et une sauce. On place un couvercle sur les barquettes, on les met dans des étuis en carton et enfin on les congèle à -30°C. Après régénération en four ménager à infra-rouge ou dans un four à micro-ondes, on déguste les viandes.

La nature des viandes, les conditions de l'injection et les résultats de dégustation sont indiqués dans le tableau 5 ci-après.

Tableau 5

| Exemple | Viande | Injection % | Rendement global % | Note de texture |
|---|---|---|---|---|
| 13 | Civet de porc | 10 | 72 | 8 |
| 14 | Boeuf bourguignon | 10 | 70 | 8 |

Exemple comparatifs K-L

A titre de comparaison, on traite les mêmes viandes (K:porc,L:boeuf) par injection de 10% d'une solution aqueuse contenant des polyphosphates (le taux de polyphosphates injectés est de 0,3%, exprimé en $P_2O_5$, par rapport à la viande crue). Les viandes avec polyphosphates obtiennent la note 7. Elles sont plus compactes, les fibres sont masquées.

Exemples 15-16

15. On hâche grossièrement de la viande de boeuf crue à 15% de matière grasse contenant 16 à 18% de collagène par rapport aux protéines, puis on y ajoute une marinade dont la composition est indiquée ci-

EP 0 442 361 B1

après:

|  | % |
|---|---|
| Concentrat de PSD selon l'exemple 1 | 13,8 |
| Amidon de maïs modifié | 8,1 |
| Sel, sucre réducteur et arôme | 11 |
| Eau | 67,1 |

On mélange la viande avec la marinade, représentant 15% de la viande crue. On hâche alors la viande finement et on la place dans des boyaux que l'on ferme seulement à l'une de leurs extrémités. On cuit ensuite la viande dans l'eau bouillante de façon à maintenir une température à coeur > à 90°C pendant 45 min. Après cuisson, on égoutte la viande, on ferme les boyaux hermétiquement, on refroidit rapidement et on congèle.

Le rendement global constitué par le pourcentage de la viande cuite égouttée par rapport à la viande crue mise en oeuvre, est de 80-83%. A titre de comparaison, le rendement global du même procédé sans incorporation de marinade est de 62-65%.

16. On découpe en cubes de 25-30 g de la viande de boeuf crue de même teneur en matière grasse et en collagène que pour l'exemple 15 et on y injecte au moyen d'une injecteuse multi-aiguilles 15% de marinade par rapport à la viande crue.

La marinade d'injection a la composition suivante:

|  | % |
|---|---|
| Concentrat de PSD selon l'exemple 1 | 13,8 |
| Amidons de maïs modifiés | 8,1 |
| Sel, sucre réducteur et arôme | 14,5 |
| Eau | 63,6 |

Après l'injection, on malaxe la viande en présence d'une marinade d'enrobage à base d'huile, représentant 3% de la viande crue. On rissole ensuite les morceaux, on les place dans des boyaux et on procède à la suite des opérations comme à l'exemple 15.

Le rendement global est de 80% alors que le rendement global du même procédé sans injection de marinade est de 63%.

**Revendications**

1. Procédé d'amélioration de la texture des viandes à cuire dans lequel on traite la viande avec une marinade contenant des protéines lactiques de manière à absorber complètement la marinade, caractérisé par le fait que l'on incorpore dans la viande crue 0,5 à 2,5% en poids de protéines sous forme de marinade, que les protéines proviennent de lactosérum doux de fromagerie dont le pH est ajusté à 6-7 et que les protéines sont dénaturées thermiquement à un taux de dénaturation de 50-90%.

2. Procédé selon la revendication 1, caractérisé par le fait que l'on incorpore la marinade par injection et/ou barattage à raison de 10 à 20% du poids de la viande crue.

3. Procédé selon la revendication 1, caractérisé par le fait que la marinade comprend outre les protéines de lactosérum dénaturées, 7 à 13% en poids d'amidon non-gélifié.

4. Procédé selon la revendication 1, caractérisé par le fait que la viande est choisie parmi le boeuf, le porc, le mouton, l'agneau, le veau, la volaille ou le gibier et se présente sous forme de morceaux choisis parmi le muscle entier, les tranches, les cubes et le hâchis.

5. Procédé selon la revendication 1, caractérisé par le fait que l'on prépare les protéines de lactosérum dénaturées à partir d'un lactosérum doux, le cas échéant concentré par évaporation, en ajustant le cas échéant le pH à 6-7, en le traitant à 95-125°C pendant 3 à 30 min, en neutralisant, concentrant par ultrafiltration, puis séchant la dispersion.

**6.** Procédé selon la revendication 1, caractérisé par le fait qu'après avoir absorbé la marinade, la viande est cuite, refroidie, conditionnée, surgelée ou stérilisée.

**7.** Procédé selon la revendication 6, adapté à la préparation des viandes maigres et pauvres en collagène, caractérisé par le fait que la viande subit une cuisson courte à basse température et que la marinade contient un amidon gélifiant entre 65 et 75°C.

**8.** Procédé selon la revendication 6, adapté à la préparation des viandes grasses et riches en collagène, caractérisé par le fait que la viande subit une cuisson longue à haute température, et que la marinade contient un amidon gélifiant entre 90 et 100°C.

**9.** Viande susceptible d'être obtenue par la mise en oeuvre du procédé selon l'une des revendications 1 à 8.

**Claims**

**1.** A process for improving the texture of meats for cooking, in which the meat is treated with a marinade containing lactic proteins so that the marinade is completely absorbed, characterized in that 0.5 to 2.5% by weight of proteins in the form of a marinade are incorporated in the raw meat, in that the proteins come from sweet whey used in cheesemaking adjusted to a pH of 6-7 and in that the proteins are thermally denatured to a level of 50-90%.

**2.** A process as claimed in claim 1, characterized in that the marinade is incorporated by injection and/or churning in a quantity of 10 to 20% by weight, based on the raw meat.

**3.** A process as claimed in claim 1, characterized in that the marinade contains 7 to 13% by weight of non-gelatinized starch in addition to the denatured whey proteins.

**4.** A process as claimed in claim 1, characterized in that the meat is selected from beef, pork, mutton, lamb, veal, poultry or game and is in the form of pieces selected from the whole muscle, slices, cubes and mince.

**5.** A process as claimed in claim 1, characterized in that the denatured whey proteins are prepared from sweet whey, optionally concentrated by evaporation, by adjusting the pH to 6-7 if necessary, treating the sweet whey for 3 to 30 mins. at 95 to 125°C and then neutralizing and concentrating the dispersion by ultrafiltration, followed by drying.

**6.** A process as claimed in claim 1, characterized in that, after absorbing the marinade, the meat is cooked, cooled, packed, deep-frozen or sterilized.

**7.** A process as claimed in claim 6 for the preparation of lean meats poor in collagen, characterized in that the meat is briefly cooked at a low temperature and in that the marinade contains a starch which gels between 65 and 75°C.

**8.** A process as claimed in claim 6 for the preparation of fatty meats rich in collagen, characterized in that the meat is subjected to prolonged cooking at a high temperature and in that the marinade contains a starch which gels between 90 and 100°C.

**9.** A meat prepared by the process claimed in any of claims 1 to 8.

**Patentansprüche**

**1.** Verfahren zur Verbesserung der Textur Von Kochfleisch durch Behandlung des Fleisches mit einer Milchproteine enthaltenden Marinade und deren vollständiger Absorption,
**dadurch gekennzeichnet,**
daß man in das rohe Fleisch 0,5 bis 2,5 Gew.-% an Proteinen in Form einer Marinade einbringt, daß die Proteine aus auf einen pH-Wert von 6 bis 7 eingestellter Süßmolke von der Käseherstellung stammen und daß die Proteine thermisch auf einen Denaturierungsgrad von 50 bis 90 % denaturiert sind.

2. Verfahren gemäß Anspruch 1,
   **dadurch gekennzeichnet,**
   daß man die Marinade durch Injektion und/oder Kirnen im Verhältnis von 10 bis 20 Gew.-% vom Rohfleisch einbringt.

3. Verfahren gemäß Anspruch 1,
   **dadurch gekennzeichnet,**
   daß die Marinade außer den denaturierten Milchproteinen 7 bis 13 Gew.-% nicht gelierter Stärke enthält.

4. Verfahren gemäß Anspruch 1,
   **dadurch gekennzeichnet,**
   daß das Fleisch aus Rindfleisch, Schweinefleisch, Schaffleisch, Lammfleisch, Kalbfleisch, Geflügel oder Wild ausgewählt ist und in Form von Stücken vorliegt, die aus ganzen Muskeln, Schnitten, Würfeln oder Gehacktem ausgewählt sind.

5. Verfahren gemäß Anspruch 1,
   **dadurch gekennzeichnet,**
   daß man die denaturierten Milchproteine aus ggfs. durch Evaporation konzentrierter Süßmolke dadurch herstellt, daß man deren pH-Wert erforderlichenfalls auf 6 bis 7 bringt, sie bei 95 bis 125 °C während 3 bis 30 Minuten behandelt, neutralisiert, durch Ultrafiltration konzentriert und die Dispersion trocknet.

6. Verfahren gemäß Anspruch 1,
   **dadurch gekennzeichnet,**
   daß nach der Absorption der Marinade das Fleisch gekocht, abgekühlt, konditioniert, tiefgefroren oder sterilisiert wird.

7. Verfahren gemäß Anspruch 6,
   angepaßt an die Herstellung von magerem und kollagenarmem Fleisch,
   **dadurch gekennzeichnet,**
   daß das Fleisch einem kurzen Kochen bei niedriger Temperatur unterworfen wird und die Marinade eine zwischen 65 und 75 °C gelierende Stärke enthält.

8. Verfahren gemäß Anspruch 6,
   angepaßt an die Herstellung von fettem und kollagenreichem Fleisch,
   **dadurch gekennzeichnet,**
   daß das Fleisch einem langen Kochen bei hoher Temperatur unterworfen wird und die Marinade eine zwischen 90 und 100 °C gelierende Stärke enthält.

9. Fleisch, erhaltbar nach dem Herstellungsverfahren gemäß einem der Ansprüche 1 bis 8.